# EUROPÄISCHE PATENTSCHRIFT

(11) **EP 0 594 808 B1**
(45) Veröffentlichungstag und Bekanntmachung des Hinweises auf die Patenterteilung: **01.10.1997**
(21) Anmeldenummer: 93908818.3
(22) Anmeldetag: 23.04.1993
(51) Int. Cl.: G01L 19/14, G01L 9/12

(54) **VORRICHTUNG ZUM MESSEN VON DRUCK UND DIFFERENZDRUCK MIT DREITEILIGEM GEWINDEGEHÄUSE UND EINEM WINKELRING**
DEVICE FOR MEASURING PRESSURE AND PRESSURE DIFFERENTIALS WITH A THREE PART THREADED HOUSING AND AN ANGLE RING
DISPOSITIF PERMETTANT DE MESURER LA PRESSION ET LA PRESSION DIFFERENTIELLE AVEC UNE BOITE FILETEE EN TROIS PARTIES ET UNE CORNIERE ANNULAIRE

(30) Priorität: 27.04.1992 DE 4213857
(43) Veröffentlichungstag der Anmeldung: 04.05.1994
(73) Patentinhaber: Endress u. Hauser GmbH u.Co., D-79689 Maulburg (DE)
(72) Erfinder: GERDES, Bernhard, D-7852 Binzen (DE); MAIER, Winfried, D-7864 Maulburg (DE)
(86) Internationale Anmeldenummer: DE9300366
(87) Internationale Veröffentlichungsnummer: WO9322646

(56) Entgegenhaltungen:
- EP-A- 0 310 975
- EP-A- 0 488 446
- US-A- 4 507 973
- US-A- 5 063 784
- WAGEN UND DOSIEREN Bd. 21, Nr. 2, M rz 1991, MAINZ DE Seiten 28 - 29, XP000242161 'MODULARES DRUCKSENSORSYSTEM'
- UND- ODER- NOR + STEUERUNGSTECHNIK Bd. 22, Nr. 12, Dezember 1989, MAINZ DE Seite 72 , XP000085106 P. MIHM 'ANPASSUNG NEUER PIEZORESISTIVER DRUCKMESSUMFORMER AN VERSCHIEDENE PROZESSANSCHLÜSSE'

## Beschreibung

Die Erfindung betrifft eine Vorrichtung zum Messen von Druck oder Differenzdruck nach dem ersten Teil des Anspruchs /(US-A-5 063 784 bis auf die Verwendung sind oxydkeramischen Druckmeßzelle).

Vorrichtungen dieser Art haben zur Aufgabe, den das Meßmedium beaufschlagenden Druck oder Differenzdruck zum Beispiel im Inneren von Behältern, Leitungen und dergleichen, d.h. im Meßraum zu erfassen, anzuzeigen oder zur Anzeige einer Schaltwarte zuzuführen oder durch die Auslösung der Betätigung von Aktoren regelnd in den Ablauf von Prozessen einzugreifen. Dazu ist es notwendig, den Wandler so am Meßort anzuordnen, daß er mechanisch befestigt ist und der von dem Druck oder Differenzdruck zu beaufschlagende Wandler in direkter räumlicher Verbindung mit dem Meßraum und damit mit den Meßmedien steht.

Aus der DE-PS 21 24 979 ist ein kapazitiver Druckfühler bekannt, bei welchem der Druckwandler entsprechend dem allgemeinen Stand der Technik von einem Gehäuse umschlossen ist. Der Druckwandler ist dabei über einen, einen Anschlußkörper durchdringenden Strömungskanal mit der Druckquelle verbunden. Der Anschlußkörper weist Mittel zur Befestigung des Fühlers am Meßort, z.B. in einer, ein Innengewinde ausweisenden Bohrung in der, das Meßmedium umschließenden Wandung oder einer Haltevorrichtung, sowie Mittel zur Einleitung eines Drehmomentes auf. Für die Funktion des Druckfühlers ist es unerläßlich, daß der, die Verbindung zwischen Druckwandler und Druckquelle bildende Strömungskanal absolut druckdicht ist. Um dies zu erreichen, schlägt diese Druckschrift vor, den Anschlußkörper eingepaßt, d.h. nichtlösbar mittels einer Preßpassung mit dem Gehäuse zu verbinden.

Ein weiterer Druckaufnehmer und ein Verfahren zur Kalibrierung von Druckaufnehmern ist der EP-OS 410 014 zu entnehmen. Hierin wird vorgeschlagen, auf der Ebene der Meßmembran durch zylindrische Vertiefungen kreuzartig Biegebalgen auszubilden, welche mit Dehnungsmeßfühlern bestückt sind. Der Druckaufnehmer weist außerdem eine koaxial ausgebildete zylindrische Vertiefung auf, in welcher ein Druckanschlußkörper eingesetzt ist. Der Druckanschlußkörper stellt hier ebenfalls einen Anschlußzapfen dar, mit welchem der Druckaufnehmer am Meßort befestigbar ist. Ein zentrisch verlaufender Druckmittelkanal stellt auch hier die Verbindung zwischen dem Meßmedium und der Meßmembran her. Ebenfalls weist auch dieser Druckanschlußkörper Mittel zur Befestigung des Druckaufnehmers sowie Mittel zur Einleitung eines Drehmomentes auf. Zur absoluten Druckdichtheit zwischen Membran und Anschlußkörper wird vorgeschlagen, beide Teile mittels einer Schweißverbindung oder einer anderen geeigneten Verbindungstechnik nichtlösbar miteinander zu verbinden.

Je nach Meßaufgabe ist es notwendig, zum Befestigen des Druck- oder Differenzdruckaufnehmers am Meßort und/oder zum Verbinden mit dem Meßmedium unterschiedliche Anforderungen zur erfüllen. So sind je nach den zu erfassenden Drücken und der das Meßmedium umschließenden Wandung oder der speziellen Haltevorrichtung unterschiedliche Durchmesser des Anschlußgewindes oder des Flansches vorzusehen. Aber auch für aggressive, korrosive und/oder explosible Medien läßt die Ausführung der Befestigungs- und/oder Verbindungsmittel nur, bestimmte, je nach den Eigenschaften des Meßmediums wie Aggressivität, Korrosion, Explosivität, Temperatur, usw. geeignete Werkstoffe zu, welche allein mit dem Meßmedium in Kontakt kommen dürfen. Darüber hinaus sind unterschiedliche Vorschriften und Normen zu beachten, welche für unterschiedliche Länder ebenfalls zu unterschiedlichen Befestigungs- und/oder Verbindungsmitteln führen. Schließlich ist es notwendig, je nach Anwendung die Befestigungs- und/oder Verbindungsmittel als Gewindezapfen oder als Befestigungsflansch vorzusehen.

Diese unterschiedlichen Anschlußmittel bedeuten aber, daß für alle Anschluß- und/oder Verbindungslösungen unterschiedliche komplette Druckmeßeinrichtungen bereit zu stellen sind, wenn sich nur die Befestigungs- und/oder Verbindungsmitteln unterscheiden. Dies stellt einen erheblichen Aufwand an Typenauswahl, Herstellungs- und Lagerkosten, usw. dar.

Die Erfindung stellt sich die Aufgabe, eine Vorrichtung zur Messung von Druck und Differenzdruck vorzuschlagen, welche durch eine lösbare Verbindung zwischen Meßwertaufnehmer und Befestigungs- und Verbindungssmitteln eine wesentliche Kosteneinsparung darstellt, die von dem Gehäuse gebildete Meßvorrichtung unabhängig von den unterschiedlichen Anforderungen unverändert bleiben kann und trotzdem die für oxydkeramische Meßwandler notwendige spannungsfreie Lagerung des Wandlers, sowie die absolut notwendige Druckdichtheit der Meßeinrichtung gewährleistet ist.

Ein weiterer Vorteil der Erfindung besteht darin, daß die Membran des Oxydkeramischen Meßwandlers, etwa zu Reinigungszwecken, leicht zugänglich ist und damit auch die Dichtungsmittel leicht ausgetauscht werden können.

Gelöst wird diese Aufgabe durch die in dem Patentanspruch 1 angegebenen Merkmale.

Weitere vorteilhafte Ausgestaltungen der Erfindung sind in den Unteransprüchen gekennzeichnet.

Weitere Vorteile der Erfindung ergeben sich aus der folgenden Beschreibung von Ausführungsbeispielen, welche in den Zeichnungen dargestellt sind.

Es zeigen:
- Fig. 1: einen Längsschnitt durch ein erstes Ausführungsbeispiel einer Vorrichtung mit der Erfindung
- Fig. 2: ein zweites Ausführungsbeispiel dieser Vorrichtung
- Fig. 3: einen vergrößerten Ausschnitt eines Details der in den Fig. 1 und 2 gezeigten Vorrichtung

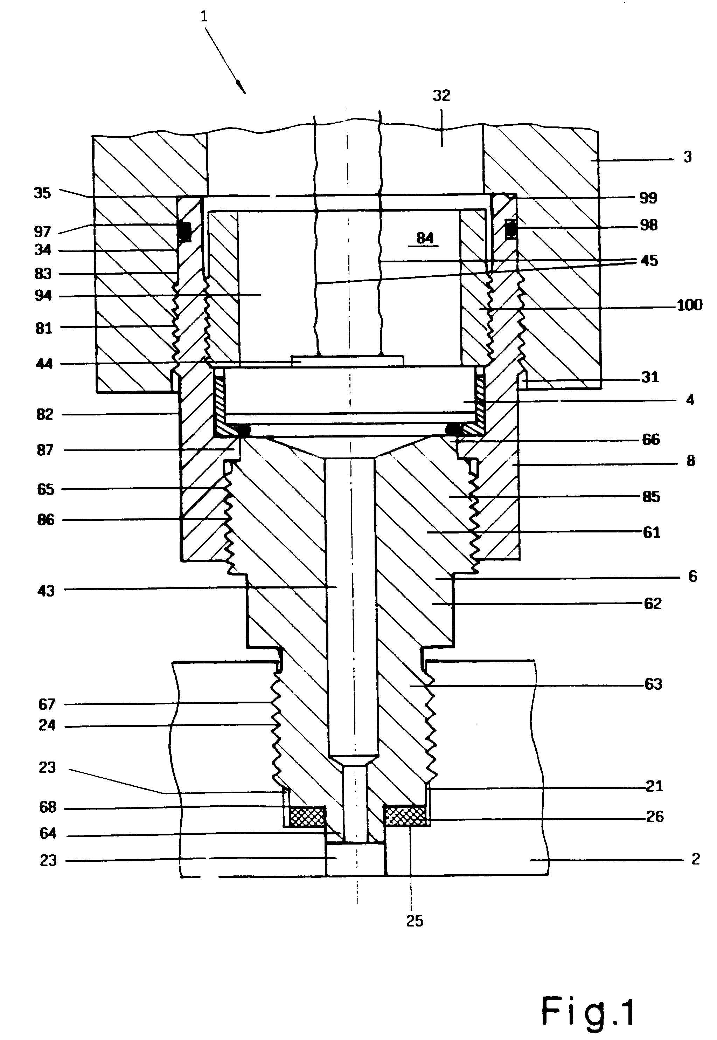

Fig. 1 zeigt eine Druckmeßeinrichtung 1, wobei der Einfachheit halber angenommen sei, daß die Druckmeßeinrichtung 1 am Meßort direkt an der das Meßmedium umschließenden Wandung 2 eines Behälters oder Rohres befestigt ist. Sie kann natürlich auch mittels einer speziellen Haltevorrichtung am Meßort befestigt sein. Die Druckmeßeinrichtung 1 hat die Aufgabe, den während eines Prozesses im Innenraum des Behälters oder Rohres herrschenden Druckes des Meßmediums zu ermitteln, in ein elektrisches Signal umzuwandeln, anzuzeigen und/oder zur Anzeige an eine vom Meßort entfernt befindliche Schaltwarte zu übertragen, oder durch die Betätigung von Aktoren regelnd in einen Prozess einzugreifen.

Zur Lösung dieser Aufgabe ist die Druckmeßeinrichtung 1 mit einer von dem Gehäuse 3 umschlossenen Anzeigeeinheit und der Druckmeßzelle 4 ausgestattet. Beispielsweise handelt es sich bei der Druckmeßzelle 4 nach einem heute üblichen Stand der Technik um eine aus einer Oxydkeramik, z.B. AL₂O₃ oder Glas oder einkristallinen Material hergestellten, zylindrischen, kapazitiven Druckmeßkörper. Die in den Figuren 1 bis 3 gezeigte Druckmeßzelle 4 weist einen, von dem Grundkörper 41 und der Membran 42 umschlossenen spaltförmigen zylindrischen Hohlraum auf, auf dessen kreiszylindrischen Innenflächen die, sich in einem definierten Abstand gegenüberliegenden und den Meßkondensator bildenden Elektrodenstrukturen, angeordnet sind. Bei der Druckmeßzelle 4 kann es sich aber auch um jeden anderen, oxydkeramischen Druckmeßkörper handeln. Die Druckmeßzelle 4 ist so angeordnet, daß die Membran 42 dem von der Wand 2 umschlossenen Meßmedium zugewandt ist. Zur Beaufschlagung durch den, im Meßmedium herrschenden Druck steht die elastische Membran 42 über einen Druckmittelkanal 43 mit dem Meßraum, d.h. dem Inneren des Behälters oder Rohres in räumlicher Verbindung. Die Druckmeßzelle 4 wandelt den von ihr beaufschlagten Druck in ein elektrisches Signal um.

Auf der dem Meßmedium abgewandten Seite besitzt die Druckmeßzelle 4 eine, teilweise in die Oberfläche implantierte elektronische Schaltung 44. Die elektronische Schaltung 44 wandelt den Kapazitätswert des Meßkondensators in eine proportionale elektrische Größe um, welche über die elektrischen Verbindungsleitungen 45 der Anzeige zugeführt wird. Zur Anzeige des Meßwertes erstreckt sich das Gehäuse 3 in Wirklichkeit ein weiteres Stück in axialer Richtung über die Darstellung hinaus und umschließt ein stirnseitig angeordnetes Anzeigegerät. Die elektronische Schaltung 44 kann aber auch statt der direkten Anzeige oder gleichzeitig dazu über die elektrischen Verbindungsleitungen 45 mit einer Anzeigeeinheit in elektrischer Verbindung stehen, welche entfernt vom Meßort in einer Schaltwarte angeordnet ist und dort den Meßwert anzeigt. Sie kann aber auch direkt oder indirekt auf Aktoren einwirken, die dann ihrerseits regelnd in den Ablauf von Prozessen eingreifen.

Zur Befestigung und/oder Verbindung mit dem Meßmedium weist die Druckmeßeinrichtung 1 den Anschlußkörper 6 auf. Im Gegensatz zu dem bisher bekannten Stand der Technik, in welcher der Anschlußkörper einstückig mit dem Gehäuse verbunden ist, stellt hier der Anschlußkörper 6 das Anschlußteil einer mehrteiligen Baugruppe dar, deren Einzelteile entsprechend der Meßaufgabe der Druckmeßeinrichtung 1 zusammengesetzt werden kann. Der Anschlußkörper 6 ist einstückig aus dem Bund 61, dem Sechskant 62, einem Gewindezapfen 63 und dem Führungsschaft 64 gebildet. Dies kann durch ein spanabhebendes oder jedes andere geeignete Herstellverfahren geschehen.

Zur mechanischen Verbindung des Anschlußkörpers 6 mit dem Druckaufnehmer ist die Mantelfläche des Bundes 61 mit einem Außengewinde 65 versehen. An der Stirnfläche des Bundes 61 erstreckt sich in axialer Richtung ein kurzer Abschnitt kleineren Durchmessers und bildet die Dichtleiste 66. An der Stirnfläche der Dichtleiste 66 ist eine ringförmige Dichtfläche 69 ausgebildet, welche sich ein Stück vom Umfang der Dichtleiste 66 in einem Winkel von 90° erstreckt. Auf die Funktion der Dichtleiste 66 soll später weiter eingegangen werden. Auf der, der Dichtleiste 66 abgewandten Seite schließt sich axial an den Bund 61 der Sechskant 62 an. Der Sechskant 62 dient der Einleitung eines Drehmomentes, mit dessen Hilfe der Anschlußzapfen 6 mechanisch mit dem Druckaufnehmer und die Druckmeßeinrichtung 1 am Meßort in der Wandung 2 oder einer anderen Befestigungs- und/oder Verbindungseinrichtung befestigt wird. An den Sechskant 62 schließt sich der Gewindezapfen 63 an, dessen Mantelfläche ebenfalls mit einem Außengewinde 67 versehen ist. Mit Hilfe des Außengewindes 67 wird die Druckmeßeinrichtung 1 z.B. in der den Meßraum umschließenden Wandung 2 befestigt. Auf der, dem Sechskant 62 abgewandten Seite ist an dem Gewindezapfen 63 der Führungsschaft 64 ausgebildet. Die unterschiedlichen Durchmesser von Gewindezapfen 63 und Führungsschaft 64 bilden eine Schulter in Form einer Ringfläche 68, welche sich ebenfalls in einem Winkel von 90° zur Symmetrieachse von der Mantelfläche des Führungsschaftes 64 erstreckt und eine Dichtungsfläche bildet.

Zur Befestigung der Druckmeßeinrichtung 1 durchdringt nun eine Bohrung 21 die Wand 2. Die Bohrung 21 erfüllt gleichzeitig zwei Aufgaben. Dazu ist sie in zwei verschieden lange Abschnitte 22, 23 unterschiedlichen Durchmessers aufgeteilt. Ein erster, der Druckmeßeinrichtung 1 zugewandter Abschnitt größeren Durchmessers 22 ist mit dem Innengewinde 24 versehen und dient der Aufnahme des Gewindezapfens 63. Wobei das Außengewinde 65 des Gewindezapfens 63 in das Innengewinde 24 der Bohrung 21 eingeschraubt wird. Der dem Meßraum zugewandte kürzere Abschnitt kleineren Durchmessers 23 stellt die räumliche Verbindung zwischen dem Meßmedium und der Druckmeßeinrichtung 1 her. Zwischen den beiden Abschnitten 22, 23 ist durch die unterschiedlichen Durchmesser ebenfalls eine ringförmige Schulter 25 gebildet, welche der Schulter 68 des Anschlußkörpers 6 gegenüberliegt. Die Befestigung der Druckmeßeinrichtung 1 geschieht unter Einschluß eines Dichtringes 26, wobei sich die Schulter 68 an der Schulter 25 abstützt. Auf der, der Druckmeßzelle 4 zugewandten Seite erweitert sich der Druckmittelkanal 43 kegelstumpfartig. Damit wird gewährleistet, daß die gesamte Kreisfläche der Membran 42 gleichmäßig von dem Druck beaufschlagt wird.

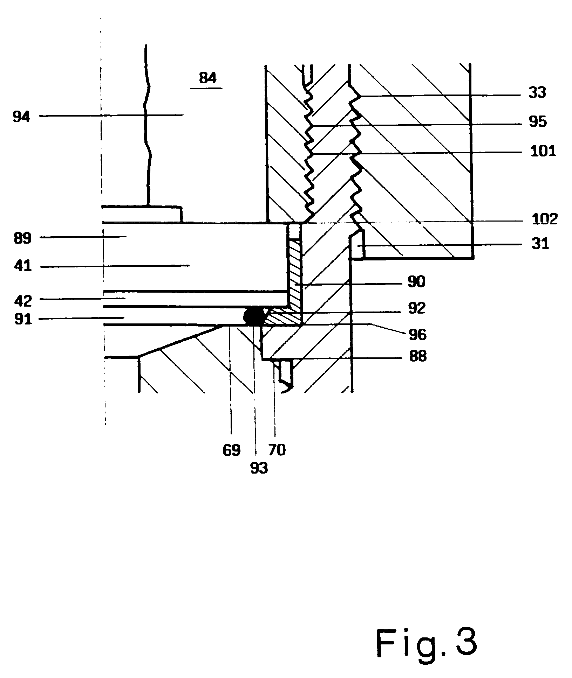

Zur Erfüllung der erfinderischen Aufgabe ist der Anschlußkörper 6 nicht direkt lösbar mit dem Gehäuse 3 verbunden, sondern dies geschieht unter Zwischenfügung des Anschlußgehäuses 8. Das Anschlußgehäuse 8 ist in Form einer Gewindebuchse gestaltet. Diese kann ebenfalls in einem spanabhebenden oder jeden anderen geeigneten Arbeitsverfahren hergestellt sein. Die Mantelfläche des Anschlußgehäuses 8 ist mit einem Außengewinde 81 versehen. Das Außengewinde 81 erstreckt sich jedoch nicht über die gesamte Länge der Mantelfläche, sondern bildet nur einen kurzen Abschnitt zwischen zwei zylindrischen Abschnitten 82 und 83. Weiter durchdringt eine Öffnung 84 das Anschlußgehäuse 8. Die Öffnung 84 weist drei Abschnitte verschiedener Länge und unterschiedlichen Durchmessers auf. An einem ersten, dem Anschlußkörper 6 zugewandten Abschnitt 85, ist ein Innengewinde 86 ausgebildet. Im eingesetzen Zustand des Anschlußkörpers 6 durchdringt der Bund 61 den Öffnungsabschnitt 85 und ist dazu mit dem Außengewinde 65 in das Innengewinde 86 eingeschraubt. Jedoch nur soweit, bis sich die, an der Dichtleiste 66 radial erstreckende Anschlagfläche 69 (Fig. 3) an der, den Anschlußkörper 6 zugewandten Stirnfläche 88 des Stützringes 87 abstützt. Der Stützring 87 umläuft bundförmigdie zylindrische Wand der Öffnung 84 und erstreckt sich ein Stück in radialer Richtung. Der Stützring 87 bildet so einen weiteren Abschnitt der Öffnung 84, jedoch mit einem kleineren Durchmesser. An dem Stützring 87 schließt sich ein weiterer Abschnitt 89 (Fig. 3) der Öffnung 84 an. Er bildet einen Hohlzylinder von, gegenüber dem Stützring 87, etwas größerem Durchmesser. In dem Abschnitt 89 ist ein topfförmiger Winkelring 90 so angeordnet, daß seine äußere Mantelfläche mit der inneren Mantelfläche der Öffnung 89 zusammenfällt. Der Winkelring 90 umschließt axial und am Boden teilweise die Druckmeßzelle 4. Der Boden des Winkelringes 90 ist von einer Öffnung 91 durchdrungen, deren Mantelfläche 92 eine Kugelzone bildet, die sich etwa in einem Winkel von 30° zur Symmetrieachse des Anschlußgehäuses 8 in der, dem Stützring 87 abgewandten Richtung erweitert. Dies ist deshalb notwendig, weil die kugelzonenförmige Mantelfläche 92 die definierte Abstützung und Halterung einer ringförmigen Dichtung 93 bildet, welche allein die absolute druckdichte Verbindung der Druckmeßzelle 4 mit dem Meßmedium gewährleistet. Dies geschieht dadurch, daß der definierte Abstand zwischen der Dichtfläche 69 und der Anschlagfläche 70 einen definierten Anpreßdruck gewährleistet, mit welchem sich die Dichtung 93 von der kugelzonenförmigen Mantelfläche 92 geführt, zwischen einer, die Membran 42 umlaufenden Ringfläche der Druckmeßzelle 4 und der Dichtfläche 69 abstützt. Die ringförmige Dichtung 93 kann aus einem handelsüblichen O-Ring gebildet und aus einem Werkstoff ausgewählt sein, welcher eine Beständigkeit gegenüber dem Meßmedium gewährleistet.

Ein weiterer Abschnitt 94 der Öffnung 84 schließt sich an den Abschnitt 89 an. Dieser ist ebenfalls von hohlzylindrischer Form und auf der, dem Abschnitt 89 zugewandten Seite ein Stück mit einem Innengewinde 95 (Fig. 3) versehen. Ein Gewindering 100 ist mittels seines Außengewindes 101 in das Innengewinde 95 des Anschlußgehäuses 8 eingeschraubt. Dabei stützt sich der Gewindering 100 mit seiner Stirnfläche 102 so über eine Ringfläche der Druckmeßzelle 4 sowie eine die Membran 91 umlaufende Ringfläche und den ringförmigen Boden des Winkelringes 90 an der, dem Winkelring 90 zugewandten Stirnfläche 96 des Stützringes 87 ab, daß die spannungsfreie Befestigung der sehr empfindlichen oxydkeramischen Druckmeßzelle 4 im Innern des Anschlußgehäuses 8 gewährleistet ist. Da sich die Druckmeßzelle 4 an dem Boden des Winkelringes 90 abstützt, sind sowohl die Druckmeßzelle 4 als auch der Winkelring 90 in ihrer Lage festgelegt und gehalten.

Zur Aufnahme des Anschlußgehäuses 8 weist das Gehäuse 3 eine zylindrische Anschlußöffnung 31 auf. Sie stellt die räumliche Verbindung zum Innenraum 32 des Gehäuses 3 her. Die Anschlußöffnung 31 ist gegenüber dem Innenraum 32 von etwas größerem Durchmesser und in axialer Erstreckung etwa bis zur Hälfte ihrer Länge mit dem Innengewinde 33 versehen. Im eingesetzten Zustand ist die Anschlußöffnung 31 von den Abschnitten 81 und 83 des Anschlußgehäuses 8 durchdrungen. Dabei stellen die Gewindeabschnitte 33 und 81 die lösbare Verbindung zwischen dem Gehäuse 3 und dem Anschlußgehäuse 8 her. Im Anschluß an den Gewindeabschnitt 33 erstreckt sich die Anschlußöffnung 31 in Form eines glatten Zylinders 34, dessen Mantelfläche mit dem Umfang des Abschnittes 83 des Anschlußgehäuses 8 zusammenfällt. Der Abschnitt 83 ist durch die Nut 97 unterbrochen. Die Nut 97 hat die Aufgabe, eine weitere ringförmige Dichtung 98 aufzunehmen. Die ringförmige Dichtung 98 stützt sich an der Innenfläche des zylindrischen Abschnittes 34 ab und verschließt den Innenraum 32 einschließlich der Öffnung 84 gegenüber der Umwelt. Auch bei der ringförmigen Dichtung 98 kann es sich um einen handelsüblichen 0-Ring ausgewählter Werkstoffe handeln. Weiter weist die Anschlußöffnung 31 an ihrem, dem Innenraum 32 zugewandten Ende, die Schulter 35 auf. Die Schulter 35 hat die Aufgabe, das Anschlußgehäuse 8 im Innern des Gehäuses 3 in seiner Lage festzulegen. Dazu stützt sich das Anschlußgehäuse 8 mit seiner Stirnfläche 99 an der Schulter 35 ab.

Die Montage des Anschlußkörpers 8 geht nun so von statten, daß zunächst der Winkelring 90 in den Öffnungsabschnitt 89 eingeführt wird. Nach nachfolgender Anordnung der Druckmeßzelle 4 werden beide Teile 4 und 90 durch einschrauben der Gewindebuchse 100 in ihrer Lage festgelegt und gehalten. Es folgt nun das Einsetzen des Anschlußkörpers 6 durch Einschrauben des Gewindes 65 in das Innengewinde 86. Nach Abschluß dieser Montagearbeiten liegt bereits eine komplette vielfach verwendungsfähige Druckmeßeinrichtung vor.

Es ist nun offensichtlich, daß die Ausführungsform der Verbindung zwischen Anschlußgehäuse 8 und damit der Druckmeßzelle 4 einerseits und dem Anschlußkörper 6 andererseits als formschlüssige und dichte lösbare Verbindung es dem Fachmann gestattet, den Anschlußkörper 6, in jeder, dem Verwendungszweck entsprechenden variablen Ausführungsform herzustellen und anzuwenden. Dies gilt für die benötigten verschiedenen Anschlußformen wie auch die Werkstoffe, aus welchen der Anschlußkörper hergestellt sein muß, um die geforderte Widerstandsfähigkeit gegenüber aggressiven oder korresiven oder explosiblen Meßmedien zu gewährleisten. Je nach Notwendigkeit der Meßaufgabe braucht nun lediglich der Anschlußkörper 6 und die ringförmige Dichtung 93 ausgewählt und über das ebenfalls variable Anschlußgehäuse 8 mit dem standardisierten Gehäuse 3 verbunden werden. Es ist selbstverständlich, daß je nach Meßaufgabe verschiedene Anschlußkörper vorgefertigt und preiswert zur Verfügung gehalten werden können. Ein weiterer Vorteil der Ausführungsform besteht darin, daß außer der keramischen Membran 42 der Druckmeßzelle 4, dem Anschlußkörper 6 und der ringförmigen Dichtung 93 kein weiteres Teil der Druckmeßeinrichtung mit dem Meßmedium in Verbindung kommt. Dies bedeutet, daß alle anderen Teile, insbesondere das Gehäuse 3 der Druckmeßeinrichtung 1 aus kostensparenden Werkstoffen hergestellt werden können.

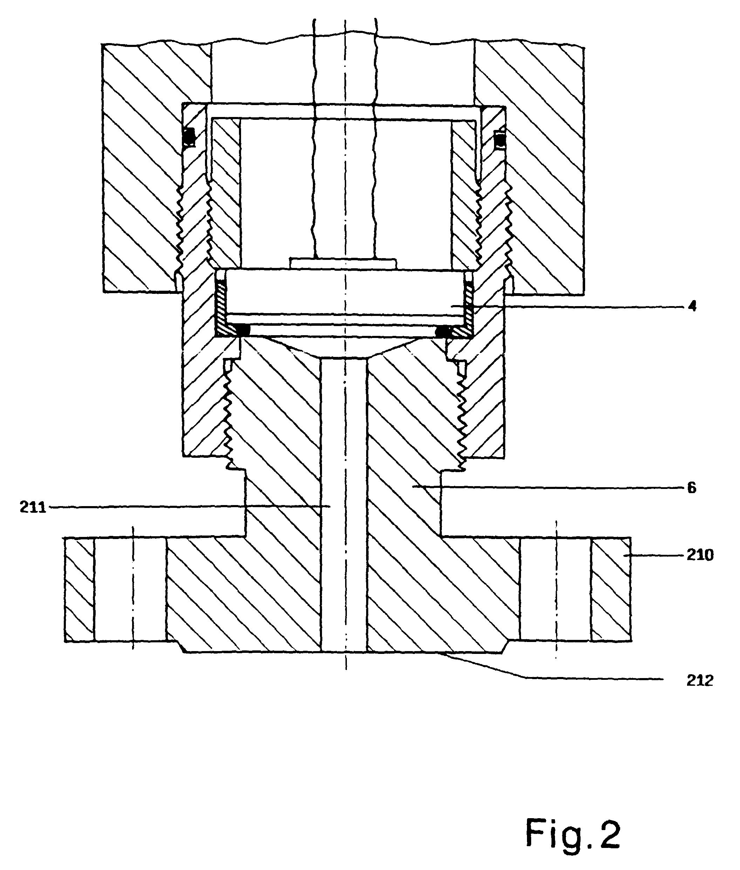

Eine weitere Ausführungsform der Erfindung zeigt Fig. 2. Hierin ist der Ansonsten gleichbleibende Anschlußkörper 6 einstückig mit dem Flansch 210 verbunden. Anschlußkörper 6 und Flansch 210 sind von der zylindrischen Bohrung 211 durchdrungen, welche lediglich eine verlängerte Ausführung des Druckmittelkanals 43 von Fig. 1 dargestellt. Auch hier steht die Druckmeßzelle 4 über die zylindrische Bohrung 211 mit dem Meßmedium in räumlicher Verbindung. Der Flansch 210 dient sowohl der Befestigung der Druckmeßeinrichtung 1 am Meßort sowie unter Zwischenfügung eines Dichtringes zur Abdichtung von Meßraum und Druckmittelkanal, wobei die absolute Dichtheit des Meßraumes gegenüber der Umwelt sowie die der Verbindung zwischen Druckwandler und Druckquelle durch die Dichtfläche 212 gewährleistet ist. Auch bei dieser Ausführungsform, kann der Anschlußkörper 6 einschließlich des Flansches 210 in jedem, dem Fachmann bekannten, Herstellungsverfahren hergestellt sein.

Bei der in Fig. 2 gezeigten Ausführungsform kann die Druckmeßeinrichtung 1 entsprechend den Erfordernissen der Meßaufgabe ebenfalls durch verschiedene auswechselbare Flanschformen, Größen und Werkstoffe gestaltet sein.

Die so gestaltete Lösbarkeit der Anschlußmittel bringt außerdem den Vorteil, daß die Lösung der Verbindung zwischen Anschlußkörper 6 und Anschlußgehäuse 8 keinen Einfluß auf die Meßgenauigkeit der sehr empfindlichen Druckmeßzelle 4 zur Folge hat.

## Patentansprüche

1. Vorrichtung zum Messen von Druck oder Differenzdruck mit einer von einem Anschlußgehäuse (8) umschlossenen oxydkeramischen Druckmeßzelle (4) zum Umwandeln des die Druckmeßzelle (4) beaufschlagenden Druckes oder Differenzdruckes in eine elektrische Größe mit einem Gewindering (100), der an einer Ringfläche der Druckmeßzelle (4) anliegt und mit einem von einer zentrischen Öffnung (43) durchdrungenen, auswechselbaren Anschlußelement (6) zur räumlichen Verbindung des das Meßmedium umschließenden Meßraumes mit der Druckmeßzelle und /oder gleichzeitigen Befestigen der Vorrichtung am Meßort, **gekennzeichnet durch** folgende Merkmale:
a) die Druckmeßzelle (4) ist mittels des Gewinderings (100) und mittels eines Winkelrings (90), der an einer die Membran (42) der Druckmeßzelle (4) umlaufenden Ringfläche anliegt, im Anschlußgehäuse (8) festgelegt;
b) die Druckmeßzelle (4) ist innerhalb des Anschlußgehäuses (8) längsseitig und stirnseitig teilweise von dem Winkelring (90) umschlossen;
c) das Anschlußgehäuse (8) weist Mittel (70, 87, 88) auf, durch welche das Anschlußelement (6) innerhalb des Anschlußgehäuses (8) in einem definierten Abstand zu der Druckmeßzelle (4) gehalten ist;
d) das Anschlußgehäuse (8) ist jeweils druckdicht und lösbar mit einem Gehäuse (3) und dem Anschlußelement (6) verbunden und das Anschlußelement (6) ist wechselbar und jedes Anschlußelement (6) nimmt innerhalb des Anschlußgehäuses (8) den gleichen definierten Abstand zur Druckmeßzelle (4) ein;
e) die lösbare Verbindung zwischen dem Anschlußelement (6) und dem Anschlußgehäuse (8) weist Dichtungsmittel (42, 69, 92, 93) auf, durch welche der, ein Stück der räumlichen Verbindung zwischen dem Meßraum und der Druckmeßzelle (4) bildendende Druckmittlerkanal (43) gegenüber der Umwelt abgedichtet ist.

2. Vorrichtung nach Anspruch 1, dadurch gekennzeichnet, daß die lösbaren Verbindungen (33, 65, 81, 86) gewindebuchsenförmige Schraubverbindungen sind.

3. Vorrichtung nach Anspruch 1, **dadurch gekennzeichnet,** daß das Anschlußgehäuse (8) teilweise von dem Anschlußelement (6) und das Gehäuse (3) teilweise von den Anschlußgehäuse (8) durchdrungen ist.

4. Vorrichtung nach Anspruch 1, **dadurch gekennzeichnet,** daß die Mittel (70, 87, 88) als ein, die Innenwand des Anschlußgehäuses (8) umlaufender, einstückig angeformter Stützring (87) und sich gegenüberliegende ringförmige Stützflächen (70, 88) ausgebildet sind.

5. Vorrichtung nach Anspruch 1 und 4, **dadurch gekennzeichnet,** daß zur Erzielung des definierten Abstandes zwischen dem Anschlußelement (6) und der Druckmeßzelle (4) das Anschlußelement (6) sich mit seiner Stützfläche (70) an der Stirnfläche (88) des Stützringes (87) des Anschlußgehäuses (8) abstützt.

6. Vorrichtung nach Anspruch 1, **dadurch gekennzeichnet,** daß das Anschlußelement (6) eine stirnseitig angeformte Dichtfläche (69) aufweist, welche sich unter Zwischenfügung einer ringförmigen Dichtung (93) an einer, die Membran (42) der Druckmeßzelle (4) umlaufenden Ringfläche abstützt.

7. Vorrichtung nach Anspruch 1, **dadurch gekennzeichnet,** daß der Winkelring (90) auf seiner, der Membran (42) der Druckmeßzelle (4) zugewandten Seite von einer zylindrischen Öffnung (91) durchdrungen ist.

8. Vorrichtung nach Anspruch 7, **dadurch gekennzeichnet,** daß die Mantelfläche (92) der zylindrischen Öffnung (91) als ein, sich in Richtung der Membran (42) erweiternder kugelzonenförmiger Stützring ausgebildet ist, welcher die ringförmige Dichtung (93) in der Öffnung (91) hält und abstützt.

9. Vorrichtung nach Anspruch 6, **dadurch gekennzeichnet,** daß die ringförmige Dichtung (93) auswechselbar und mediumbeständig ist.

10. Vorrichtung nach Anspruch 1, **dadurch gekennzeichnet,** daß die Druckmeßzelle (4) und der Winkelring (90) innerhalb des Anschlußgehäuses (8) mittels der Gewindebuchse (100) in ihrer Lage gehalten sind und sich die Gewindebuchse (100) mit der Stirnfläche (102) über die Druckmeßzelle (4) und den Winkelring (90) an der Stirnfläche (96) des Stützringes (87) abstützt.

11. Vorrichtung nach Anspruch 1 und 10, **dadurch gekennzeichnet,** daß sich das Anschlußgehäuse (8) mit seiner Stirnfläche (99) an der Schulter (35) des Gehäuses (3) abstützt.

12. Vorrichtung nach Anspruch 1, **dadurch gekennzeichnet,** daß die Druckmeßzelle (4) über die elektrischen Verbindungsleitungen (45) mit einer Anzeigeeinheit und/oder einem Aktor verbunden ist.

13. Vorrichtung nach Anspruch 1, **dadurch gekennzeichnet,** daß das Anschlußelement (6) in verschiedenen Ausführungsformen ausgebildet ist.

## Claims

1. A device for measuring pressure or differential pressure, comprising an oxide-ceramic pressure cell (4), enclosed by a connecting case (8), for converting the pressure or differential pressure acting on the pressure cell (4) into an electrical quantity, a threaded ring (100) resting against a ring surface of the pressure cell (4), and a replaceable connector element (6) with a central opening (43) for spatially connecting the measuring space surrounding the measuring medium with the pressure cell and/or for fixing the device at the measuring point, **characterized by** the following features:
a) The pressure cell (4) is fixed in the connecting case (8) by means of the threaded ring (100) and by means of a flange ring (90) which rests against a ring surface of the diaphragm (42) of the pressure cell (4);
b) within the connecting case (8), the pressure cell is partially enclosed at the side and at one end by the flange ring (90);
c) the connecting case (8) comprises means (70, 87, 88) whereby the connector element (6) is held within the connecting case (8) at a defined distance from the pressure cell (4);
d) the connecting case (8) is separably connected with the case (3) and the connector element (6) in such a way as to provide pressure-tight seals, and the connector element (6) is replaceable, and each connector element (6) is located within the connecting case (8) at the same defined distance from the pressure cell (4); and
e) the separable connection between the connector element (6) and the connecting case (8) comprises sealing means (42, 69, 92, 93) whereby the pressure-medium channel (43) forming a portion of the spatial connection between the measuring space and the pressure cell (4) is sealed from the environment.

2. A device as claimed in claim 1, **characterized in** that the separable connections (33, 65, 81, 86) are provided by threaded-bush-shaped means.

3. A device as claimed in claim 1, **characterized in** that the connecting case (8) is partially penetrated by the connector element (6), and that the case (3) is partially penetrated by the connecting case (8).

4. A device as claimed in claim 1, **characterized in** that the means (70, 87, 88) are implemented as a support ring (87), which is formed integrally on the inside wall of the connecting case (8), and opposing ring-shaped support surfaces (70, 88).

5. A device as claimed in claims 1 and 4, **characterized in** that in order to achive the defined distance between the connector element (6) and the pressure cell (4), the support surface (70) of the connector element (6) is supported on the end face (88) of the support ring (87) of the connecting case (8).

6. A device as claimed in claim 1, **characterized in** that the connector element (6) has a sealing surface (69) formed on an end face thereof which is supported by a ring surface of the diaphragm (42) of the pressure cell (4) via an interposed ring seal (93).

7. A device as claimed in claim 1, **characterized in** that the flange ring (90) has a cylindrical opening (91) on its side facing the diaphragm (42) of the pressure cell (4).

8. A device as claimed in claim 7, **characterized in** that the lateral surface (92) of the cylindrical opening (91) is formed as a spherical-zone-shaped support ring which expands in the direction of the diaphragm (42) and which holds and supports the ring seal (93) in the opening (91).

9. A device as claimed in claim 6, **characterized in** that the ring seal (93) is replaceable and medium-resistant.

10. A device as claimed in claim 1, **characterized in** that the pressure cell (4) and the flange ring (90) are held in place within the connecting case (8) by means of the threaded ring (100), and that the end face (102) of the threaded ring (100) is supported by the end face (96) of the support ring (87) via the pressure cell (4) and the flange ring (90).

11. A device as claimed in claim 1 and 10, **characterized in** that an end face (99) of the connecting case (8) is supported on a shoulder (35) of the case (3).

12. A device as claimed in claim 1, **characterized in** that the pressure cell (4) is connected by electric lines (45) to a display unit and/or an actuator.

13. A device as claimed in claim 1, **characterized in** that the connector element (6) is implemented in different forms.

## Revendications

1. Dispositif destiné à mesurer la pression ou la pression différentielle, comprenant un capteur de pression (4), inséré dans un boîtier d'assemblage (8) et destiné à convertir en une grandeur électrique la pression ou la pression différentielle appliquée sur le capteur de pression (4), comprenant une bague filetée (100), qui s'appuie contre un anneau du capteur de pression (4), et comprenant un élément d'assemblage (6) amovible, traversé par une ouverture centrale (43), assurant la liaison dans l'espace entre l'enceinte de mesure entourant le milieu à mesurer et le capteur de pression et/ou simultanément la fixation du dispositif sur le lieu de mesure, caractérisé par les caractéristiques suivantes :
a) le capteur de pression (4) est fixé contre le boîtier d'assemblage (8) par l'intermédiaire de la bague filetée (100) et par l'intermédiaire d'une cornière annulaire (90), qui s'appuie contre un anneau entourant la membrane (42) du capteur de pression (4) ;
b) une partie du capteur de pression (4) est entourée, à l'intérieur du boîtier d'assemblage (8), sur sa paroi longitudinale et sa paroi frontale, partiellement par une cornière annulaire (90) ;
c) le boîtier d'assemblage (8) comporte de moyens (70, 87, 88), par lesquels l'élément d'assemblage (6) est maintenu à l'intérieur du boîtier d'assemblage (8) à une distance déterminée du capteur de pression (4) ;
d) le boîtier d'assemblage (8) est assemblé de manière étanche et amovible avec un boîtier (3) et l'élément d'assemblage (6), l'élément d'assemblage (6) est amovible et chaque élément d'assemblage (6) est situé à l'intérieur du boîtier d'assemblage (8) à la même distance déterminée du capteur de pression (4) ;
e) la liaison amovible entre l'élément d'assemblage (6) et le boîtier d'assemblage (8) comprend des moyens d'étanchéité (42, 69, 92, 93), qui permettent de rendre étanche face à l'environnement la conduite du fluide sous pression (43), qui forme une partie de la liaison dans l'espace entre l'enceinte de mesure et le capteur de pression (4).

2. Dispositif selon la revendication 1, caractérisé en ce que les liaisons amovibles (33, 65, 81, 86) sont des liaisons vissées en forme de douilles filetées.

3. Dispositif selon la revendication 1, caractérisé en ce que l'élément d'assemblage (6) pénètre partiellement dans le boîtier d'assemblage (8) et le boîtier d'assemblage (8) pénètre partiellement dans le boîtier (3).

4. Dispositif selon la revendication 1, caractérisé en ce que les moyens (70, 87, 88) sont conçus comme une bague de support (87), entourant la paroi intérieure du boîtier d'assemblage (8) et formée d'une seule pièce, et comme des surfaces de support (70, 88) annulaires, situées l'une en face de l'autre.

5. Dispositif selon les revendications 1 et 4, caractérisé en ce que, pour obtenir la distance déterminée entre l'élément d'assemblage (6) et le capteur de pression (4), l'élément d'assemblage (6) s'appuie avec sa surface de support (70) contre la surface frontale (88) de la bague de support (87) du boîtier d'assemblage (8).

6. Dispositif selon la revendication 1, caractérisé en ce que l'élément d'assemblage (6) comporte une surface étanche (69) formée contre sa partie frontale, laquelle surface étanche s'appuie par l'intermédiaire d'un joint torique d'étanchéité (93) contre un anneau entourant la membrane (42) du capteur de pression (4).

7. Dispositif selon la revendication 1, caractérisé en ce que la cornière annulaire (90), sur sa face orientée vers la membrane (42) du capteur de pression (4), est traversée par une cavité cylindrique (91).

8. Dispositif selon la revendication 7, caractérisé en ce que la surface latérale (92) de la cavité cylindrique (91) est conçue en forme de bague de support formant une zone sphérique qui s'élargit en direction de la membrane (42), laquelle bague de support maintient et supporte le joint torique d'étanchéité (93) dans la cavité (91).

9. Dispositif selon la revendication 6, caractérisé en ce que le joint torique d'étanchéité (93) est amovible et résiste au milieu à mesurer.

10. Dispositif selon la revendication 1, caractérisé en ce que le capteur de pression (4) et la cornière annulaire (90) sont maintenus dans leur position à l'intérieur du boîtier d'assemblage (8) par l'intermédiaire de la douille filetée (100) et la douille filetée (100) s'appuie avec sa surface frontale (102) contre la surface frontale (96) de la bague de support (87), par l'intermédiaire du capteur de pression (4) et de la cornière annulaire (90).

11. Dispositif selon les revendications 1 et 10, caractérisé en ce que le boîtier d'assemblage (8) s'appuie avec sa surface frontale (99) contre l'épaulement (35) du boîtier (3).

12. Dispositif selon la revendication 1, caractérisé en ce que le capteur de pression (4) est relié à une unité d'affichage ou à un acteur par l'intermédiaire d'une ligne électrique de connexion (45).

13. Dispositif selon la revendication 1, caractérisé en ce que l'élément d'assemblage (6) présente des formes de réalisation différentes.
